(19) Europäisches Patentamt
European Patent Office
Office européen des brevets

(11) Numéro de publication : **0 561 969 B1**

(12) # FASCICULE DE BREVET EUROPEEN

(45) Date de publication du fascicule du brevet : **21.09.94 Bulletin 94/38**

(51) Int. Cl.$^5$ : **G02F 1/313**

(21) Numéro de dépôt : **92901779.6**

(22) Date de dépôt : **10.12.91**

(86) Numéro de dépôt international : **PCT/FR91/00994**

(87) Numéro de publication internationale : **WO 92/10780 25.06.92 Gazette 92/14**

(54) **DISPOSITIF DE MODULATION ELECTROOPTIQUE INTEGRE.**

(30) Priorité : **14.12.90 FR 9015678**

(43) Date de publication de la demande : **29.09.93 Bulletin 93/39**

(45) Mention de la délivrance du brevet : **21.09.94 Bulletin 94/38**

(84) Etats contractants désignés : **DE GB IT SE**

(56) Documents cités :
**EP-A- 0 361 152**
**GB-A- 2 190 512**
**APPLIED PHYSICS LETTERS, vol. 53, no. 20, 14 November 1988, New York, US, pp 1908-1910; Y. BOURBIN et al.: "Intrinsically resonant travelingwave Y-fed directional couplers at high frequency".**

(56) Documents cités :
**IEEE TRANSACTIONS ON MICROWAVE THEORY AND TECHNIQUES, vol. 38, no. 5, May 1990, New York, US, pp 669-673; T.R. HALEMANE et al.: "Distortion charasteristics of optical directional coupler modulators".**
**IEEE JOURNAL OF QUANTUM ELECTRONICS, vol. QE-22, no. 12, December 1986, New York, US, pp 2191-2194; K.T. KOAI et al.: "Digital and quasi-linear electrooptic modulators synthesized from directional couplers".**

(73) Titulaire : **THOMSON-CSF**
**173, Boulevard Haussmann**
**F-75008 Paris (FR)**

(72) Inventeur : **RIVIERE, Luc**
**Thomson-CSF S.C.P.I.**
**F-92045 Paris-La Défense Cédex 67 (FR)**

(74) Mandataire : **Desperrier, Jean-Louis et al**
**THOMSON-CSF**
**SCPI**
**B.P. 329**
**50, rue Jean-Pierre Timbaud**
**F-92402 Courbevoie Cédex (FR)**

EP 0 561 969 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte aux dispositifs qui permettent de moduler un signal optique à partir d'un signal électrique. De tels dispositifs sont le plus souvent intégrés à la surface d'un substrat constitué d'un matériau dont les propriétés optiques changent sous l'effet d'un champ électrique qui lui est appliqué. Ces dispositifs permettent notamment de moduler un signal lumineux pour pouvoir transmettre des signaux analogiques, par exemple des signaux de télévision sur une fibre optique.

Pour moduler un signal optique par un signal analogique, il est nécessaire d'utiliser un modulateur dont la réponse électrooptique soit la plus linéaire possible afin d'éviter une distorsion trop importante du signal à transmettre. Les tolérances de linéarité peuvent être, selon les signaux à transmettre, plus ou moins grandes mais elles sont particulièrement réduites dans le cas trés important de la transmission d'un ensemble de canaux de télévision en modulation d 'amplitude à bande latérale réduite, connue sous le sigle MABLR.

On connait différentes structures de modulateurs, dont certaines permettent d'annuler les non linéarités d'ordre pair en utilisant la symétrie de la réponse électrooptique. On pourra par exemple consulter sur ce sujet IEEE Transactions Microwave Theory and Techniques, vol. 28, N° 5, mai 1990, article de HALEMANE et KOROTKY page 673.

KWANG TSAI KOAI et al. ont proposé dans un article publié dans IEEE Journal of Quantum Electronics, vol. 22, N° 12, décembre 1986, page 2191 - 2194 une structure de modulateur basée sur un coupleur directif permettant d'obtenir une bonne linéarité. Cette structure améliore globalement les caractéristiques du coupleur directif, mais ne permet pas d'annuler les termes d'ordre pair ni ceux d'ordre 3.

Pour obtenir une bonne linéarité tout en annulant les termes d'ordre pair ainsi qu'au moins ceux d'ordre 3, l'invention propose un dispositif de modulation électrooptique, principalement caractérisé en ce qu'il comprend sur un substrat électrooptique :

- une première section comprenant une jonction en Y destinée à recevoir le signal optique à moduler et à le diviser en deux parties identiques ;
- une deuxième section comprenant deux guides optiques parallèles pour recevoir les deux parties du signal optique sortant de la première section ; ces guides étant couplés entre eux sur une première longueur L1 en déterminant une longueur de couplage lc1 ; cette deuxième section comprenant également deux premières électrodes s'étendant sur le substrat le long des guides à l'extérieur de ceux-ci pour recevoir le signal électrique de modulation et appliquer aux guides un champ électrique de modulation ;
- une troisième section dans laquelle les guides optiques se prolongent en restant parallèles et couplés entre eux sur une deuxième longueur L2 en déterminant une deuxième longueur de couplage lc2 ;
- une quatrième section pour séparer les guides optiques et délivrer deux signaux optiques modulés d'intensités différentes ;

ce dispositif étant principalement caractérisé en ce que le rapport $\frac{L1}{lc1}$ est compris entre 0,73 et 0,86 et que la longueur de L2 est choisie pour annuler la distorsion d'ordre 3 et obtenir un taux d'extinction supérieur à 20 dB

D'autres particularités et avantages de l'invention apparaîtront clairement dans la description suivante faite à titre d'exemple non limitatif en regard des figures annexées qui représentent :

- la figure 1, un schéma en plan d'un modulateur selon l'invention ;
- la figure 2, des courbes de réponses de modulateurs ; et
- les figures 3 à 7, des schémas en plan de variantes du modulateur de la figure 1.

Dans l'exemple de réalisation représentée sur la figure 1, le coupleur selon l'invention est formé de quatre parties 1 à 4.

La première partie 1 comprend une jonction en Y de type connu dans laquelle le signal lumineux arrivant par un guide d'entrée 101 est divisé en deux parties sensiblement égales par deux bras 102 et 103 qui s'écartent du guide 101.

Ces bras alimentent deux guides parallèles 104 et 105 qui traversent les parties 2 et 3.

Dans la partie 2, deux électrodes 106 et 107 s'étendent le long de ces guides et à l'extérieur de ceux-ci. Le terme "extérieur" utilisé ici est purement conventionnel pour décrire l'invention. La position exacte par rapport aux guides dépend, de manière connue, du matériau et de la coupe utilisés. Ainsi avec du $LiNb0_3$en coupe Z, les électrodes recouvrent partiellement les guides. L'électrode 107 est reliée à la masse tandis que l'électrode 106 est reliée d'un côté à une source de modulation qui lui applique un signal électrique V et de l'autre à la masse par une résistance 108 elle-même reliée à la masse. Ce système d'alimentation des électrodes est représenté de manière purement illustrative et dépend essentiellement de la configuration de l'étage de sortie délivrant le signal V. L'essentiel est que ces électrodes permettent d'appliquer au substrat électrooptique sur lequel est intégré l'ensemble du dispositif un champ électrique qui suit la modulation du signal V et qui fait

changer au rythme de cette modulation les caractéristiques optiques du substrat, et donc les caractéristiques de propagation des signaux lumineux dans les morceaux des guides 104 et 105 situés dans la partie 2 du dispositif.

Les guides 104 et 105 s'étendent ensuite, dans cet exemple de réalisation, à travers la partie 3 dans le prolongement de leur chemin dans la partie 2 (donc avec le même écartement).

Ensuite dans la partie 4, ces guides s'éloignent pour que l'interaction entre eux cesse. Ils arrivent alors sur des guides de sortie 109 et 110 qui délivrent respectivement les signaux optiques modulés $P_R$ et $P_S$.

Les longueurs des guides 104 et 105 à travers les parties 2 et 3 étant respectivement égales à $L_1$ et $L_2$, les puissances optiques $P_R$ et $P_S$ en sortie du modulateur sont données par, $P_i$ étant la puissance d'entrée sur le guide 101 :

$$P_R = \frac{P_i}{2}\left\{1 - X\left[\frac{Y}{\gamma^2}\left[1-\cos(\pi Y)\right]\cos(\pi\theta) + \frac{\sin(\pi\gamma)}{\gamma}\sin(\pi\theta)\right]\right\}$$

$$P_S = \frac{P_i}{2}\left\{1 + X\left[\frac{Y}{\gamma^2}\left[1-\cos(\pi Y)\right]\cos(\pi\theta) + \frac{\sin(\pi\gamma)}{\gamma}\sin(\pi\theta)\right]\right\}$$

où

$$X = \frac{\Delta\beta_{eo} L_1}{\pi}$$

$$\gamma = \sqrt{X^2 + Y^2}$$

$$\theta = \frac{L_2}{l_{c2}}$$

$$Y = \frac{L_1}{l_{c1}}$$

Dans ces formules $\Delta\beta$ eo est le déphasage par unité de longueur induit entre les deux guides grâce à l'Effet Pockels dans le matériau utilisé et X est donc proportionnel au signal V. En outre lc1 et lc2 sont les longueurs de couplage, connues en elles-mêmes, dans les sections 2 et 3 ; ici comme l'écartement des guides est le même dans ces sections lc1 = lc2 = lc.

On constate que lorsque $\theta$ est un entier on obtient une réponse correspondant à celle d'un coupleur en Y conventionnel.

Lorsque $\theta$ n'est pas un entier, la présence de la zone passive correspondant à la section 3 fait que la réponse électrooptique est composée de deux termes dont les poids respectifs dépendent de la valeur de $\theta$, c'est-à-dire de la longueur de cette zone passive.

Comme la réponse électrooptique est symétrique, toutes les distorsions d'ordre pair s'annulent. En outre on peut annuler la non linéarité d'ordre 3, qui est celle la plus gênante par ce qu'elle crée une intermodulation d'ordre 3, en choisissant une valeur adéquate de $\theta$ pour que les distorsions d'ordre 3 du premier et du deuxième terme se compensent. Cette valeur adéquate de $\theta$ est donnée par la relation :

$$\tan(\pi\theta) = \frac{2 - \pi Y \sin(\pi Y) - 2\cos(\pi Y)}{\pi Y \cos(\pi Y) - \sin(\pi Y)}$$

Dans le cas particulier où les longueurs L1 et L2 sont telles que $\frac{L1}{lc1}$ = 0,794 et $\frac{L2}{lc2}$ = 0,784, non seulement le modulateur linéarisé a des distorsions d'ordre pair et d'ordre 3 nulles, mais encore son taux d'extinction est infini, c'est-à-dire que $P_R$ ou $P_S$ est nul pour une tension déterminée Vsat. En d'autres termes, lorsque V = Vsat, toute la lumière est modulée et sort par un seul des deux guides de sortie. Toute la puissance optique peut donc être modulée.

En outre, pour des valeurs de $\frac{L1}{lc1}$ prises entre 0,73 et 0,86, il existe toujours une longueur de L2 qui permet simultanément l'annulation de la distorsion d'ordre 3 et un taux d'extinction supérieur à 20 dB.

On constate que le rapport $\frac{L2}{lc2}$ joue un rôle important dans l'invention. En particulier, si on souhaite diminuer la longueur hors tout du composant, compte tenu de ce que la longueur L1 détermine l'action du signal

électrique et qu'il n'est donc pas souhaitable de la réduire de trop, on peut par contre pour diminuer L2 rapprocher les guides dans la section 3, comme représenté sur la figure 3 et ainsi diminuer également lc2.

On a représenté sur la figure 2 la caractéristique de modulation, c'est-à-dire la puissance $P_R$ dans le guide de sortie 109 en fonction de la tension V de modulation, ces deux valeurs étant normalisées à 1, pour d'une part un modulateur du type Mach-Zehnder autobiaisé (courbe en pointillés) et d'autre part un modulateur selon l'invention dans le cas particulier décrit plus haut où l'on a un taux d'extinction parfait (courbe continue). On constate bien, sur ce graphique, la supériorité du modulateur selon l'invention par rapport à l'art connu représenté par le modulateur de type Mach-Zehnder.

Dans une variante de l'invention, représentée sur la figure 4, on utilise dans la section 3 deux électrodes 111 et 112 qui s'étendent le long des guides 104 et 105 le long et à l'extérieur de ceux-ci, et une électrode 113 s'étendant le long de ces deux guides entre les deux. En reliant les électrodes extérieures 111 et 112 à la masse et en appliquant à l'électrode intérieure 113 une tension V2 continue mais ajustable (ou le contraire), on peut modifier de manière électrique le comportement de cette section 3. En effet le champ électrique qui est appliqué par les électrodes 106 et 107 s'exerce de manière différentielle sur les guides pour obtenir la modulation, alors que celui qui est appliqué par les électrodes 111 à 113 s'exerce de manière symétrique sur les guides et ne modifie pas la répartition de l'énergie entre eux, mais agit simplement sur le coefficient de couplage pour modifier le paramètre $\theta$. De cette manière on peut ajuster ce coefficient pour annuler au mieux la distorsion d'ordre 3, en utilisant par exemple une méthode de zéro. Ceci permet par exemple d'éviter les tris des composants en sortie de fabrication, et/ou de réduire les tolérances de fabrication.

On peut généraliser les structures décrites ci-dessus en appliquant la modulation aux sections 2 et 3 avec des recouvrements électrooptiques différents sur ces deux sections, comme dans la figure 5 où l'électrode 106 se prolonge dans la section 3 à l'extérieur et le long du guide 105 après avoir franchi les guides 104 et 105 à l'aide d'un pont 115. Une autre électrode 116 s'étend le long du guide 104 à l'opposé de l'électrode 114 pour pouvoir appliquer le champ entre les deux guides dans la section 3. Cette électrode 116 est reliée à la masse et le champ électrique est donc dans la section 3 inverse de celui dans la section 2. On peut ainsi disposer d'un degré de liberté supplémentaire en choisissant de manière adéquate les longueurs de chaque section, les écartements entre les guides et les recouvrements électrooptiques. Ce degré de liberté supplémentaire permet par exemple de minimiser les distorsions d'ordre 5. On constate d'ailleurs qu'en annulant la longueur des électrodes dans la section 3 de la figure 5 on retombe sur la structure de la figure 3.

La variante la plus générale est représentée en figure 6, où l'électrode 207 s'étend le long de tout le guide 105 et l'électrode 307 le long du guide 104 dans la section 3 du même côté que l'électrode 106. Une tension $V_3$ appliquée à l'électrode 307 est ajustable pour obtenir le résultat voulu comme décrit ci-dessus. Elle peut changer de polarité pour obtenir le même résultat que dans la figure 5 en évitant le pont 115. Il est préférable d'obtenir cette tension $V_3$ à partir de la tension V avec des moyens permettant d'obtenir $V_3 = \alpha V$ où $\alpha$ est le paramètre ajustable, qui peut être négatif.

On peut en outre, à l'aide de moyens électroniques mesurant le taux de distorsion, régler en temps réel cette tension $V_3$, et donc la valeur de $\alpha$, pour minimiser le taux de distorsion résiduel.

Enfin pour certaines applications, on peut souhaiter réduire les distorsions impaires d'ordre supérieur (5, 7...) au prix d'un léger résidu de distorsion d'ordre 3. Pour cela on prendra une valeur de $\theta$ qui minimise ces distorsions d'ordre supérieur et qui par conséquent laisse subsister une certaine distorsion d'ordre 3.

Ceci peut s'obtenir, comme représenté sur la figure 7, en alimentant les électrodes 106 et 307 à partir de la même tension V par un séparateur radio-fréquence 701. 106 est alimentée directement et 307 par un commutateur 702 qui permet de sélectionner ou non un inverseur unitaire 703. Un potentiomètre 704, électronique par exemple, permet ensuite d'appliquer la tension $\alpha V$ ou - $\alpha V$ à 307.

## Revendications

1. Dispositif de modulation électrooptique, qui comprend sur un substrat électrooptique :
   - une première section comprenant une jonction guide optique en Y destinée à recevoir (101) le signal optique à moduler et à le diviser en deux parties identiques (102, 103) ;
   - une deuxième section comprenant deux guides optiques parallèles (104, 105) pour recevoir les deux parties du signal optique sortant de la première section ; ces guides étant couplés entre eux sur une première longueur L1 en déterminant une longueur de couplage lc1 ; cette deuxième section comprenant également deux premières électrodes (106, 107) s'étendant sur le substrat le long des guides à l'extérieur de ceux-ci pour recevoir le signal électrique (V) de modulation et appliquer aux guides un champ électrique de modulation ;
   - une troisième section dans laquelle les guides optiques se prolongent en restant parallèles et couplés

entre eux sur une deuxième longueur L2 en déterminant une deuxième longueur de couplage lc2 ;
- une quatrième section pour séparer (109, 110) les guides optiques et délivrer deux signaux optiques ($P_R$, $P_S$) modulés d'intensités différentes ;

ce dispositif étant caractérisé en ce que le rapport $\frac{L1}{lc1}$ est compris entre 0,73 et 0,86 et que la longueur de $L_2$ est choisie pour annuler la distorsion d'ordre 3 et obtenir un taux d'extinction supérieur à 20 dB.

2. Dispositif selon la revendication 1, caractérisé en ce que le rapport $\frac{L1}{lc1}$ est sensiblement égal à 0,794 et le rapport $\frac{L2}{lc2}$ est sensiblement égal à 0,784.

3. Dispositif selon l'une quelconque des revendications 1 et 2, caractérisé en ce que l'intervalle entre les guides optiques est le même dans la deuxième et dans la troisième sections.

4. Dispositif selon l'une quelconque des revendications 1 et 2, caractérisé en ce que l'intervalle entre les guides optiques est différent entre la deuxième et la troisième sections .

5. Dispositif selon l'une quelconque des revendications 1 à 4, caractérisé en ce qu'il ne comporte dans sa troisième section aucun moyen permettant d'appliquer un champ électrique au guide.

6. Dispositif selon l'une quelconque des revendications 1 à 4, caractérisé en ce qu'il comprend dans sa troisième section deux deuxièmes électrodes (111, 112) s'étendant le long des guides à l'extérieur de ceux-ci et réunis à un potentiel commun, et une troisième électrode 113 s'étendant le long des guides entre eux et destinée à recevoir un signal électrique continu ajustable permettant de modifier la longueur de couplage lc2 de la troisième section.

7. Dispositif selon l'une quelconque des revendication 1 à 4, caractérisé en ce que l'une des deux premières électrodes (106) se prolonge dans la troisième section pour s'étendre à l'extérieur et le long du guide (105) auquel elle n'est pas contiguë dans la première section, et qu'il comprend en outre une quatrième électrode (116) qui s'étend à l'extérieur et le long de l'autre guide dans la troisième section, cette quatrième électrode étant reliée au même potentiel que celle des deux premières électrodes qui ne se prolongent pas dans la troisième section.

8. Dispositif selon l'une quelconque des revendications 1 à 7, caractérisé en ce que les longueurs des guides (104, 105) dans les deuxièmes et troisièmes sections, et les longueurs de couplage correspondantes permettent d'obtenir un taux d'extinction infini sur l'un des signaux ($P_R$, $P_S$) de sortie du modulateur.

9. Dispositif selon l'une quelconque des revendications 1 à 4, caractérisé en ce que l'une (207) des deux premières électrodes se prolonge dans la troisième section pour s'étendre à l'extérieur et le long du guide (105) auquel elle est contiguë dans la première section, et qu'il comprend en outre une cinquième électrode (307) qui s'étend à l'extérieur et le long de l'autre guide dans la troisième section, cette cinquième électrode étant destinée à recevoir un signal électrique ($V_3$) de correction.

10. Dispositif selon la revendication 9, caractérisé en ce que le signal électrique de correction est proportionnel ($\alpha V$) au signal électrique de modulation (V).

11. Dispositif selon l'une quelconque des revendications 9 et 10, caractérisé en ce qu'il comprend en outre des moyens (701) pour séparer en deux parties le signal électrique de modulation (V) et pour appliquer ces parties d'une part à la première électrode (106) limitée à la deuxième section, et d'autre part à un commutateur (702) permettant éventuellement de sélectionner un inverseur unitaire (703), puis à un potentiomètre (704) destiné à alimenter la cinquième électrode (307).

## Patentansprüche

1. Elektro-optische Modulationsvorrichtung, die auf einem elektro-optischen Substrat aufweist:
- einen ersten Abschnitt mit einer Y-förmigen optischen Gabel, die das zu modulierende optische Signal empfangen (101) und in zwei gleiche Teile (102, 103) aufspalten soll,
- einen zweiten Abschnitt mit zwei parallelen Lichtleitern (104, 105), die die beiden Teile des optischen Signals aus dem ersten Abschnitt empfangen sollen und miteinander über eine erste Länge L1 gekoppelt sind, wodurch eine Kopplungslänge lc1 bestimmt wird, wobei dieser zweite Abschnitt weiter zwei erste Elektroden (106, 107) aufweist, die sich auf dem Substrat entlang der Lichtleiter außerhalb von diesen erstrecken und ein elektrisches Modulationssignal (V) empfangen sowie die Lichtleiter einem elektrischen Modulationsfeld aussetzen,
- einen dritten Abschnitt, in dem die Lichtleiter sich parallel fortsetzen und miteinander über eine zweite Länge L2 gekoppelt sind, wodurch eine zweite Kopplungslänge lc2 bestimmt wird,
- einen vierten Abschnitt, um die Lichtleiter voneinander zu trennen (109, 110) und zwei optische Signale ($P_R$, $P_S$) zu liefern, die mit unterschiedlichen Stärken moduliert sind, dadurch gekennzeichnet, daß das Verhältnis L1/lc1 zwischen 0,73 und 0,86 liegt und daß die Länge L2 so gewählt ist, daß die Verzerrung dritter Ordnung annuliert wird und ein Löschungsgrad größer als 20 dB erreicht wird.

**2.** Vorrichtung nach Anspruch 1, dadurch gekennzeichnet, daß das Verhältnis L1/lc1 im wesentlichen gleich 0,794 ist und daß das Verhältnis L2/lc2 im wesentlichen gleich 0,784 ist.

**3.** Vorrichtung nach einem beliebigen der Ansprüche 1 und 2, dadurch gekennzeichnet, daß der Abstand zwischen den Lichtleitern im zweiten und im dritten Abschnitt derselbe ist.

**4.** Vorrichtung nach einem beliebigen der Ansprüche 1 und 2, dadurch gekennzeichnet, daß der Abstand zwischen den Lichtleitern im zweiten Abschnitt anders als im dritten Abschnitt ist.

**5.** Vorrichtung nach einem beliebigen der Ansprüche 1 bis 4, dadurch gekennzeichnet, daß sie im dritten Abschnitt kein Mittel zum Anlegen eines elektrischen Feldes an den Lichtleiter enthält.

**6.** Vorrichtung nach einem beliebigen der Ansprüche 1 bis 4, dadurch gekennzeichnet, daß sie in ihrem dritten Abschnitt zwei zweite Elektroden (111, 112), die sich entlang der Lichtleiter außerhalb dieser Lichtleiter erstrecken und an ein gemeinsames Potential angeschlossen sind, und eine dritten Elektrode (113) aufweist, die sich entlang der Lichtleiter zwischen diesen erstreckt und ein einstellbares elektrisches Gleichspannungssignal empfängt, das die Kopplungslänge lc2 des dritten Abschnitts zu verändern vermag.

**7.** Vorrichtung nach einem beliebigen der Ansprüche 1 bis 4, dadurch gekennzeichnet, daß eine der beiden ersten Elektroden (106) sich im dritten Abschnitt fortsetzt und außerhalb und entlang des Lichtleiters (105) verläuft, neben dem sie im zweiten Abschnitt nicht verläuft, und daß weiter eine vierte Elektrode (116) vorgesehen ist, die sich außerhalb und entlang des anderen Lichtleiters im dritten Abschnitt erstreckt und an dasselbe Potential wie diejenige der beiden ersten Elektroden angeschlossen ist, die sich nicht bis in den dritten Abschnitt erstreckt.

**8.** Vorrichtung nach einem beliebigen der Ansprüche 1 bis 7, dadurch gekennzeichnet, daß die Längen der Lichtleiter (104, 105) im zweiten und im dritten Abschnitt und die entsprechenden Kopplungslängen einen Löschungsgrad unendlich bezüglich eines der Signale ($P_R$, $P_S$) am Ausgang des Modulators ergeben.

**9.** Vorrichtung nach einem beliebigen der Ansprüche 1 bis 4, dadurch gekennzeichnet, daß eine der beiden ersten Elektroden (207) sich bis in den dritten Abschnitt fortsetzt, und zwar außerhalb und entlang des Lichtleiters (105), neben dem sie im zweiten Abschnitt verläuft, und daß weiter eine fünfte Elektrode (307) vorgesehen ist, die sich außerhalb und entlang des anderen Lichtleiters in diesem dritten Abschnitt erstreckt und ein elektrisches Korrektursignal ($V_3$) empfangen soll.

**10.** Vorrichtung nach Anspruch 9, dadurch gekennzeichnet, daß das elektrische Korrektursignal proportional ($\alpha$V) zum elektrischen Modulationssignal (V) ist.

**11.** Vorrichtung nach einem beliebigen der Ansprüche 9 und 10, dadurch gekennzeichnet, daß sie außerdem Mittel (701) besitzt, um das elektrische Modulationssignal (V) in zwei Teile aufzuspalten und um diese Teile einerseits an die erste Elektrode (106), die sich auf den zweiten Abschnitt beschränkt, und andererseits an einen Schalter (702), der ggf. einen Einheitsinverter (703) auszuwählen erlaubt, und weiter an ein Potentiometer (704) anzulegen, das die fünfte Elektrode (307) speisen soll.

## Claims

1. Electrooptical modulation device which comprises on an electrooptical substrate:
   - a first section comprising a Y-shaped optical guide junction intended to receive (101) the optical signal to be modulated and to divide it into two identical parts (102, 103);
   - a second section comprising two parallel optical guides (104, 105) for receiving the two parts of the optical signal exiting from the first section; these guides being coupled together over a first length L1 thereby determining a coupling length lc1; this second section also comprising two first electrodes (106, 107) extending over the substrate along the guides outside the latter so as to receive the electrical modulating signal (V) and apply an electric modulating field to the guides;
   - a third section into which the optical guides are prolonged while remaining parallel and coupled together over a second length L2 thereby determining a second coupling length lc2;
   - a fourth section to separate (109, 110) the optical guides and deliver two modulated optical signals ($P_R$, $P_S$) of different strengths;

   this device being characterized in that the ratio $\frac{L1}{lc1}$ is between 0.73 and 0.86 and in that the length of $L_2$ is chosen so as to cancel out the distortion of order 3 and obtain a suppression factor of greater than 20 dB.

2. Device according to Claim 1, characterized in that the ratio $\frac{L1}{lc1}$ is substantially equal to 0.794 and the ratio $\frac{L2}{lc2}$ is substantially equal to 0.784.

3. Device according to either one of Claims 1 and 2, characterized in that the gap between the optical guides is the same in the second and in the third sections.

4. Device according to either one of Claims 1 and 2, characterized in that the gap between the optical guides is different between the second and the third sections.

5. Device according to any one of Claims 1 to 4, characterized in that in its third section it does not include any means allowing an electric field to be applied to the guide.

6. Device according to any one of Claims 1 to 4, characterized in that in its third section it comprises two second electrodes (111, 112) extending along the guides outside the latter and joined up to a common potential, and a third electrode 113 extending along the guides between them and intended to receive an adjustable DC electrical signal allowing modification of the coupling length lc2 of the third section.

7. Device according to any one of Claims 1 to 4, characterized in that one of the two first electrodes (106) is prolonged into the third section so as to extend outside and along the guide (105) with which it is not contiguous in the first section, and in that it furthermore comprises a fourth electrode (116) which extends outside and along the other guide in the third section, this fourth electrode being connected to the same potential as that one of the two first electrodes which is not prolonged into the third section.

8. Device according to any one of Claims 1 to 7, characterized in that the lengths of the guides (104, 105) in the second and third sections, and the corresponding coupling lengths make it possible to obtain an infinite suppression factor on one of the output signals ($P_R$, $P_S$) of the modulator.

9. Device according to any one of Claims 1 to 4, characterized in that one (207) of the two first electrodes is prolonged into the third section so as to extend outside and along the guide (105) with which it is contiguous in the first section, and in that it furthermore comprises a fifth electrode (307) which extends outside and along the other guide in the third section, this fifth electrode being intended to receive an electrical correction signal ($V_3$).

10. Device according to Claim 9, characterized in that the electrical correction signal is proportional ($\alpha V$) to the electrical modulating signal (V).

11. Device according to either one of Claims 9 and 10, characterized in that it furthermore comprises means (701) for separating the electrical modulating signal (V) into two parts and for applying these parts on

the one hand to the first electrode (106) limited to the second section, and on the other hand to a switch (702) making it possible optionally to select a unitary invertor (703), and then to a potentiometer (704) intended to supply the fifth electrode (307).

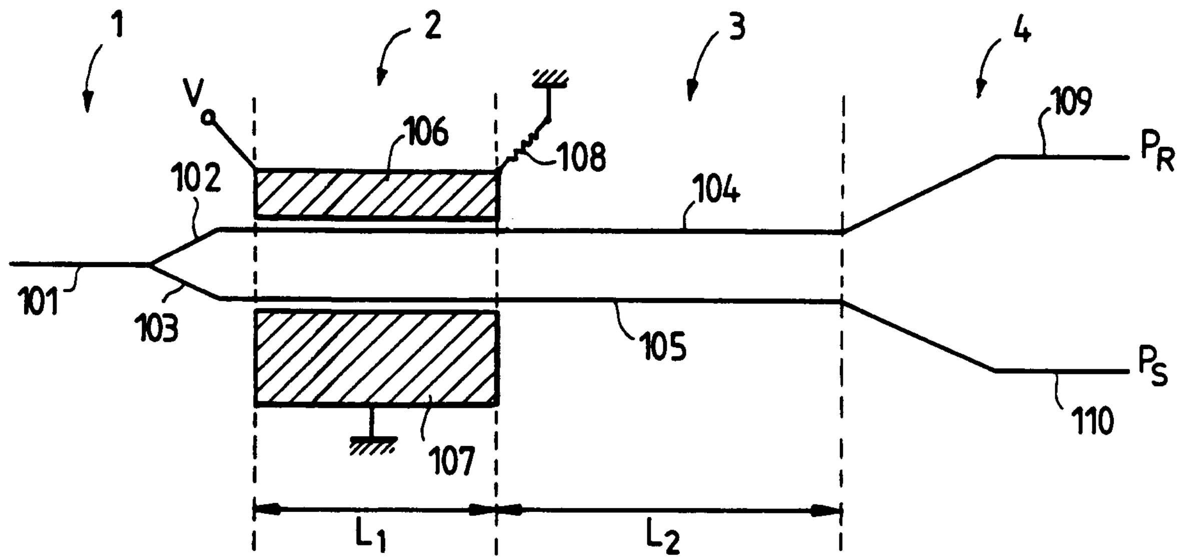
1
2
3
4
V
106
108
109
$P_R$
102
104
101
103
105
$P_S$
110
107
$L_1$
$L_2$

FIG. 1

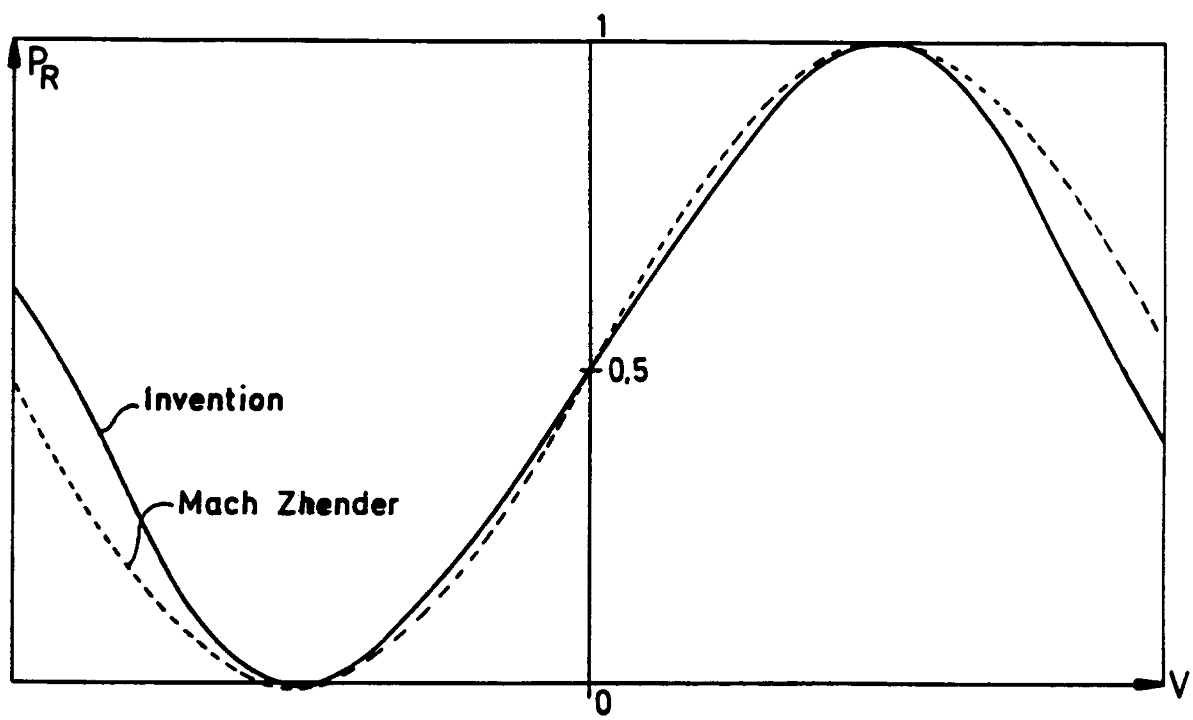
$P_R$
1
Invention
Mach Zhender
0,5
0
V

FIG. 2

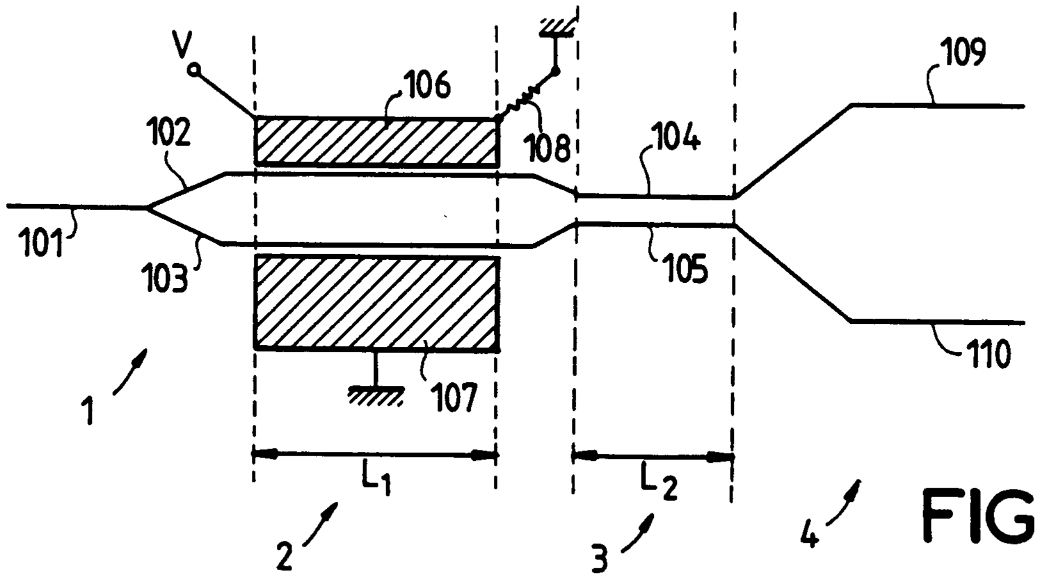
V
106
108
109
102
104
101
103
105
110
1
107
$L_1$
$L_2$
2
3
4

FIG. 3

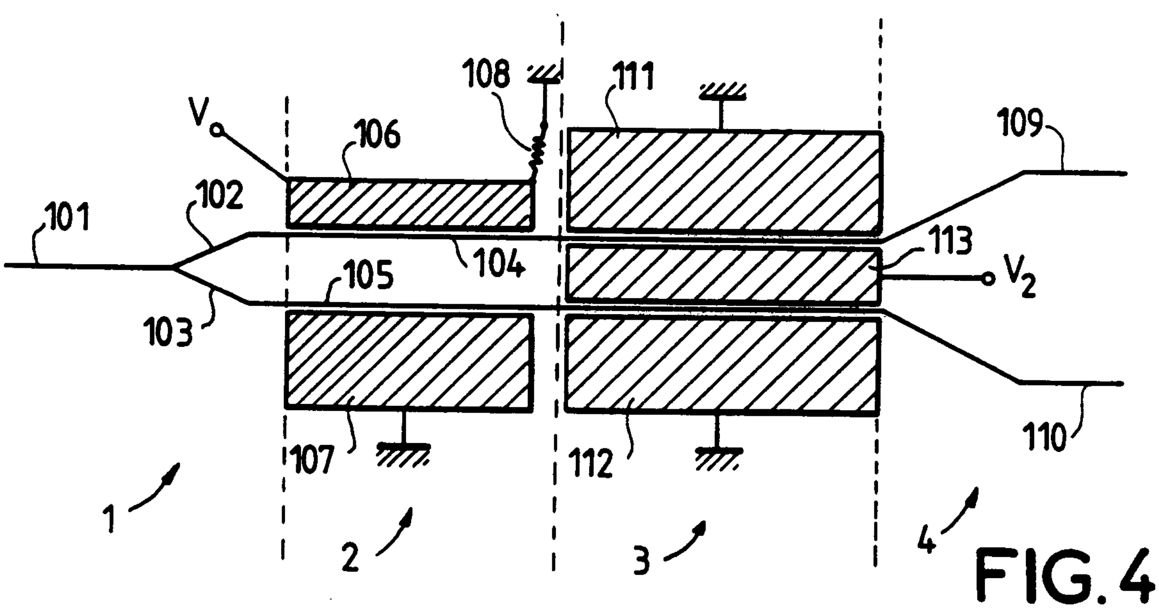
108
111
V
106
109
102
101
104
113
105
$V_2$
103
107
112
110
1
2
3
4

FIG. 4

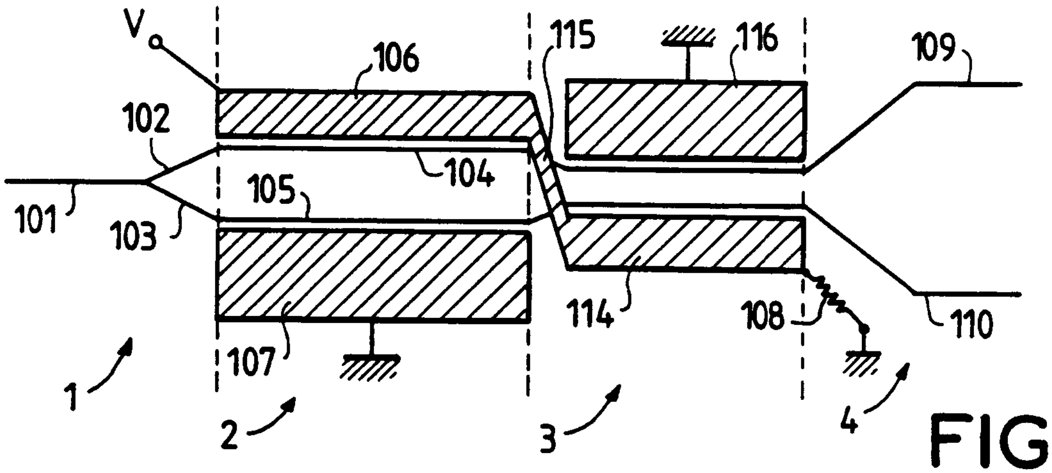
V
102
101
103
106
104
105
107
115
116
114
108
109
110
1
2
3
4

FIG.5

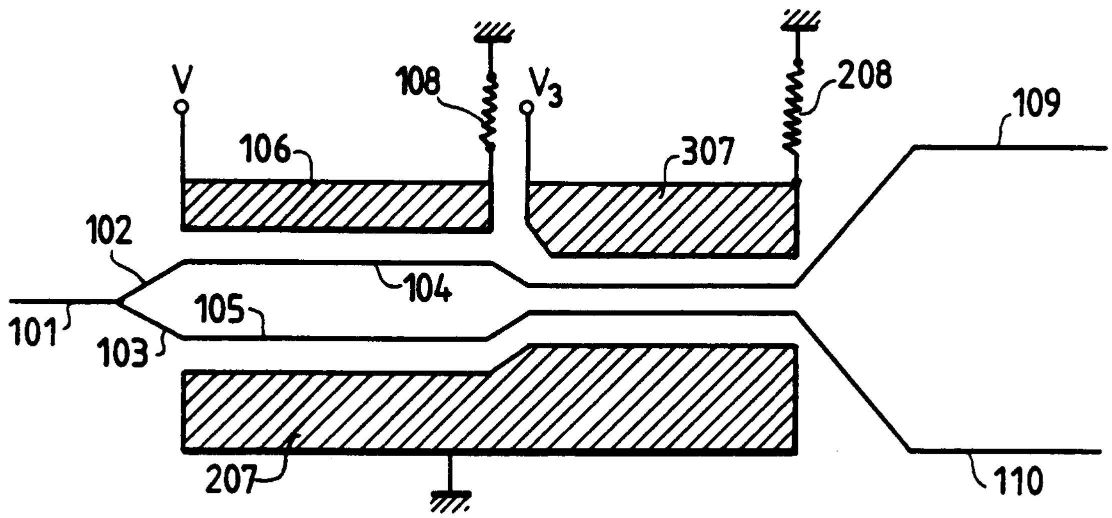
V
108
V3
208
106
307
102
104
101
105
103
207
109
110

FIG.6

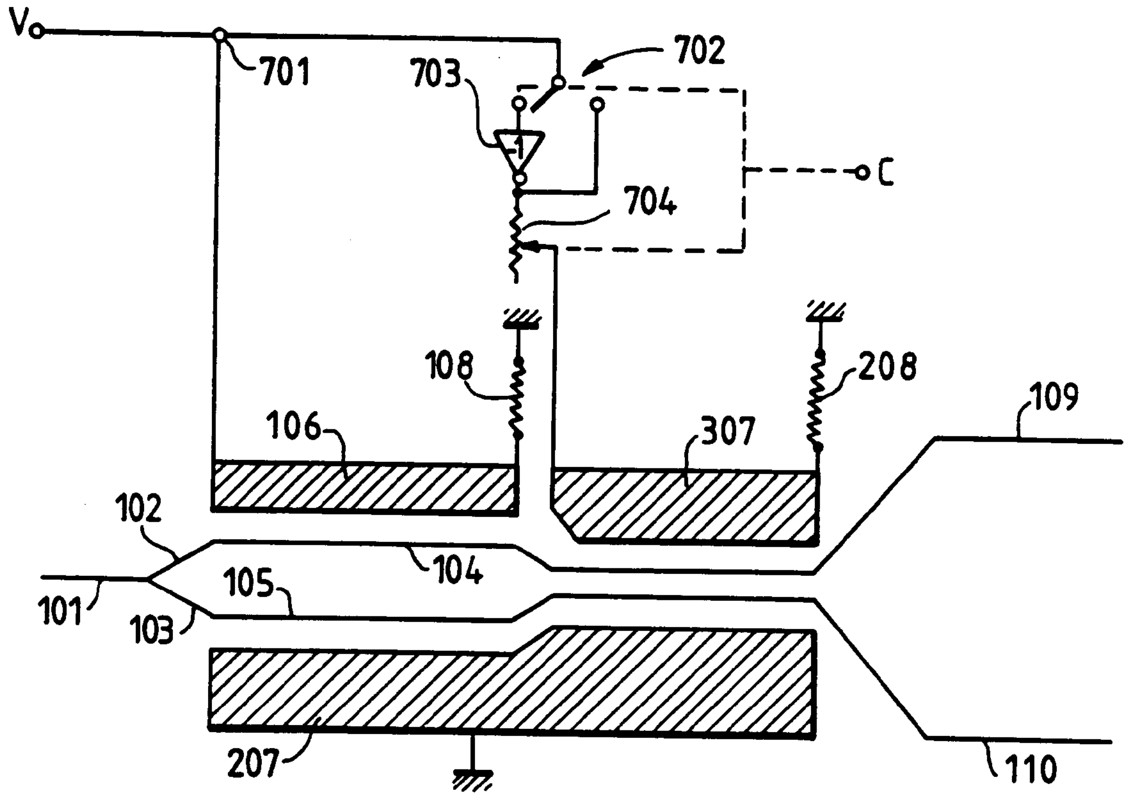
V
701
702
703
-1
C
704
108
208
109
106
307
102
104
105
101
103
207
110

FIG.7